# EUROPÄISCHE PATENTSCHRIFT

(11) **EP 1 459 476 B1**
(45) Veröffentlichungstag und Bekanntmachung des Hinweises auf die Patenterteilung: **24.01.2007**
(21) Anmeldenummer: 02805728.9
(22) Anmeldetag: 25.11.2002
(51) Int. Cl.: H04L 9/12

(54) **Datenverarbeitungsvorrichtung zum Wechsel eines Schlüssels in unregelmässigen zeitlichen Abständen**
Data processing device for changing a key at irregular time intervals
Dispositif de traitement de données servant à changer une clé à des intervalles temporels irréguliers

(30) Priorität: 27.12.2001 DE 10164174
(43) Veröffentlichungstag der Anmeldung: 22.09.2004
(73) Patentinhaber: Infineon Technologies AG, 81669 München (DE)
(72) Erfinder: ECKSTEIN, Gernot, 85375 Neufahrn (DE); KÜNEMUND, Thomas, 80337 München (DE); SEDLAK, Holger, 82054 Sauerlach (DE)
(74) Vertreter: Epping - Hermann - Fischer
(86) Internationale Anmeldenummer: PCT/DE2002/004322
(87) Internationale Veröffentlichungsnummer: WO 2003/056747

(56) Entgegenhaltungen:
- US-A- 5 249 232
- US-A- 6 073 125
- BRUCE SCHNEIER: "Applied Cryptography second edition" 1996 , JOHN WILEY & SONS , USA XP002237843 Seite 183 -Seite 184

## Beschreibung

Die Erfindung betrifft eine Datenverarbeitungsvorrichtung mit einem Bussystem und Verschlüsselungsvorrichtungen zur Ver- und Entschlüsselung von auf dem Bussystem übertragenen Informationen und mindestens einer Schlüsselwechselvorrichtung zum Austausch des verwendeten Schlüssels.

Die Verschlüsselung interner Daten auf Bussen und in Speichern ist eine wichtige Maßnahme gegen Angriffe auf sicherheitssensible Schaltungen. Von unberechtigten Dritten ausgelesene verschlüsselte Daten sind im allgemeinen wertlos, so daß ein rein physikalischer Zugriff auf die Busleitungen oder andere Datenleitungen nicht mehr zum Ziel des Angreifers führt, nämlich Informationen über die internen Abläufe der Datenverarbeitungsvorrichtung und der gespeicherten beziehungsweise verarbeiteten Daten zu erhalten. Ziel eines Angriffes muß es dann zunächst sein, den jeweils verwendeten Schlüssel zu ermitteln.

Aus der US 5,249,232 ist eine Verschlüsselungseinrichtung zum Ver- und Entschlüsseln von Daten bekannt, die von einem Prozessor an einen Datenbus übertragen werden, bzw. von dem Datenbus empfangen werden.

Aus dem Buch "Applied Crytography, second edition" von Bruce Schneider, 1996, John Wiley & Sons, USA, XP-002237843 ist die Notwendigkeit einer Begrenzung der Lebensdauer von Schlüsseln bekannt.

Aus der US 6,073,125 ist ein System zum Überprüfen von verschlüsselten Einlieferungsdaten von Briefsendungen bekannt, bei denen ein sich wechselnder Schlüssel eingesetzt wird.

Zur Erhöhung der Sicherheit ist es bekannt, den Schlüssel nach einer bestimmten Zeit auszutauschen. Die Zeit, die einem Angreifer zur Ermittelung des verwendeten Schlüssels und zum Auslesen der Daten verbleibt, ist dadurch begrenzt. Bei strengen Sicherheitsanforderungen ist es üblich, den Schlüssel in sehr kurzen zeitlichen Abständen auszutauschen. Dies führt zwar zu einer erhöhten Sicherheit der Daten und einem guten Schutz gegen Angreifer, allerdings erhöht ein häufiger Schlüsselwechsel den Stromverbrauch der Schaltung in starkem Maß. Dies ist dadurch zu erklären, daß bei einem Schlüsselwechsel durchschnittlich 50 % der Register, die in der Datenverarbeitungsvorrichtung verwendet werden, geändert werden müssen. Neben den bei Datenverarbeitungs vorrichtungen bekannten Problemen der Erwärmung der Halbleiterschaltungen tritt insbesondere bei kontaktlosen Chipkarten das Problem auf, daß die zur Verfügung stehende Leistung zum Betrieb der Datenverarbeitungsvorrichtung sehr gering ist, da diese auch kontaktlos zur Chipkarte übertragen werden muß.

Wenn der Stromverbrauch so gering gehalten werden soll, daß der Einsatz in einer kontaktlosen Chipkarte möglich ist, kann ein häufiger Schlüsselwechsel nicht durchgeführt werden, es müssen also Abstriche bei der Sicherheit der Datenverarbeitungsvorrichtung gemacht werden.

Aufgabe der Erfindung ist es daher, eine Datenverarbeitungsvorrichtung anzugeben, die sowohl eine hohe Sicherheit der auf einem Bussystem übertragenen Informationen gewährleistet, aber dennoch einen geringen Stromverbrauch besitzt.

Diese Aufgabe wird durch eine Datenverarbeitungsvorrichtung der eingangs genannten Art gelöst, die dadurch gekennzeichnet ist, daß die Datenverarbeitungsvorrichtung mindestens ein Mittel zur Erzeugung einer Schlüsselwechselsignals aufweist, das Schlüsselwechselsignal der mindestens einen Schlüsselwechselvorrichtung zugeführt wird, das Mittel zur Erzeugung der Schlüsselwechselsignals mindestens einen Eingang für eine Zufallszahl aufweist und das Mittel (1, 2) zur Erzeugung des Schlüsselwechselsignals dazu eingerichtet ist, in unregelmäßigen zeitlichen Abständen eine Abhängigkeit von der Zufallszahl (3, 4) das Schlüsselwechselsignal zu erzeugen.

Ein erfolgreicher Angriff beispielsweise durch differentielle Stromprofilanalyse beinhaltet eine statistische Analyse von in der Datenverarbeitungsvorrichtung durchgeführten Vorgängen. Ein erfindungsgemäßer Wechsel des verwendeten Schlüssels in unregelmäßigen zeitlichen Abständen erschwert daher die Anwendung oben genannter Analysemethode, da nicht voraussagbar ist, wann ein Schlüsselwechsel erfolgen wird.

Dabei ist insbesondere vorteilhaft, wenn der Zeitpunkt zum Wechsel des Schlüssels durch eine Zufallszahl bestimmt ist, da somit der Zeitpunkt zum Wechsel des Schlüssels auch durch aufwendige Berechnungen nicht vorhersagbar ist.

In einer vorteilhaften Ausführung besitzt die Datenverarbeitungsvorrichtung mindestens eine Schlüsselwechselvorrichtung, die bei Anliegen eines Schlüsselwechselsignals einen Schlüsselwechsel durchführt, wobei das Schlüsselwechselsignal durch eine Vorrichtung zur Erzeugung eines Schlüsselwechselsignals erzeugt wird mit einem Taktteilerverhältnisfestleger, der einen Zustandsautomat aufweist, wobei vorbestimmten Taktteilerverhältnissen jeweils mindestens ein Zustand zugeordnet ist und Zustandsänderungen von der Wertigkeit eines Zufallssignals abhängig sind, und einer Taktteilerverhältnissteuerung, die mit dem Taktteilerverhältnisfestleger verbunden ist und durch die aus einem regelmäßigen Taktsignal das Schlüsselwechselsignal entsprechend den durch den Zustand des Zustandsautomaten festgelegten Taktteilerverhältnisses erzeugbar ist.

Weitere vorteilhafte Ausgestaltungen der Erfindung sind in den Unteransprüchen angegeben.

Die Erfindung wird nachfolgend anhand eines Ausführungsbeispieles näher erläutert. Es zeigt:
- Figur 1: ein Blockschaltbild mit wesentlichen Komponenten einer erfindungsgemäßen Datenverarbeitungsvorrichtung,
- Figur 2: einen Zustandsgraphen des Taktteilerverhältnisfestlegers und
- Figur 3: eine Schaltungsanordnung zur Realisierung eines Taktteilerverhältnisfestlegers.

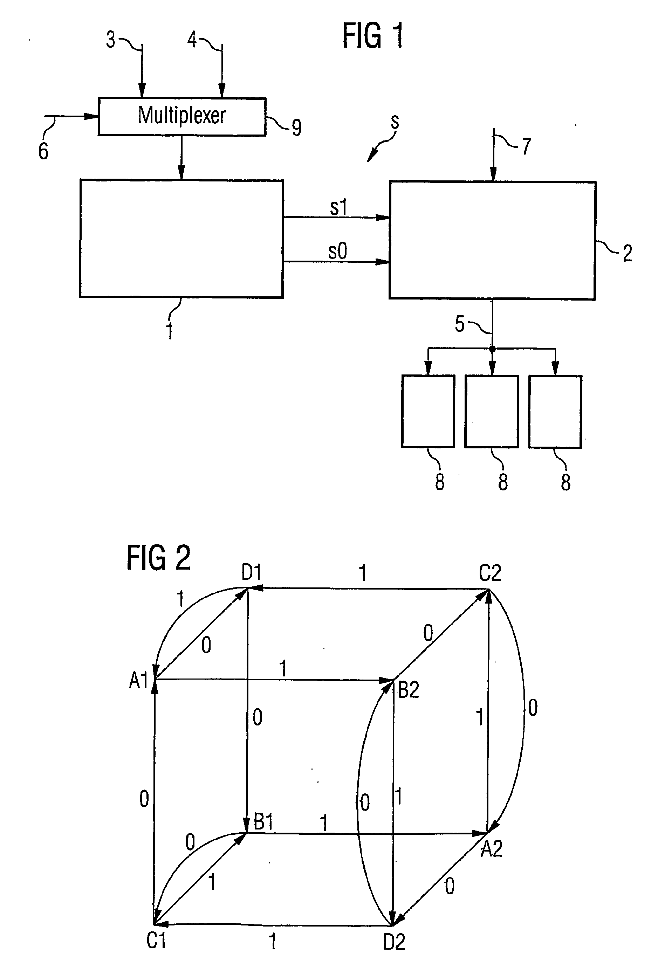

In Figur 1 ist ein Blockschaltbild einer erfindungsgemäßen Datenverarbeitungsvorrichtung dargestellt. Dabei sind Verschlüsselungsvorrichtungen zugeordnete Schlüsselwechselvorrichtungen 8 vorgesehen, die jeweils den zur Ver- und Entschlüsselung von Daten notwendigen Schlüssel auf Veranlassung durch ein Schlüsselwechselsignal 5 wechseln können. Das Schlüsselwechselsignal 5 wird durch eine Taktteilerverhältnissteuerung 2 erzeugt. Diese besitzt einen Eingang für ein periodisches Taktsignal 7 und ist darüber hinaus mit einem Taktteilerverhältnisfestleger 1 verbunden, von dem sie ein Signal s mit zwei Bits s0 und s1 erhält. Die Taktteilerverhältnissteuerung 2 filtert entsprechend dem Signal s, das sie von dem Taktteilerverhältnisfestleger 1 erhält, Impulse aus dem Taktsignal 7 aus. Das Signal s legt dabei fest, welches durch die Taktteilerverhältnissteuerung vorbestimmte Taktteilerverhältnis A, B, C oder D dazu verwendet werden soll. In diesem Ausführungsbeispiel sind die folgenden Taktteilerverhältnisse vorgesehen:

| A | B | C | D |
|---|---|---|---|
| 1:2 | 1:4 | 1:6 | 1:8 |

Welche der vier Taktteilerverhältnisse Anwendung finden soll, ist durch die vier Möglichkeiten der Zahl s0, s1 bestimmt. In einer konkreten Realisierung ist die Taktteilerverhältnissteuerung durch einen steuerbaren Zähler realisiert, der bis 2, 4, 6 und 8 zählen kann. Ein solcher Zähler kann dem Stand der Technik entnommen werden.

Kern der Erfindung ist, daß ein automatischer Wechsel des verwendeten Schlüssels in unregelmäßigen zeitlichen Abständen erfolgt. Dies wird durch einen Taktteilerverhältnisfestleger 1 realisiert, der durch eine Zufallszahl 3 oder 4 angesteuert wird. Im Ausführungsbeispiel von Figur 1 besitzt die Zufallszahl eine Länge von 1 Bit. Dabei kann es sich entweder um ein pseudozufälliges Bit 3 oder ein echt zufälliges Bit 4 handeln. Ein pseudozufälliges Bit ist gemäß dem Stand der Technik beispielsweise durch einen spannungsgesteuerten Oszillator mit einem nachgeschalteten rückgekoppelten Schieberegister erzeugbar. Ein echt zufälliges Bit 4 kann durch eine Rauschquelle generiert werden. Im Ausführungsbeispiel von Figur 1 ist vorgesehen, daß durch einen Multiplexer 9 eine dieser Zufallszahlen ausgewählt werden kann. Dies ist jedoch optional. Es genügt, wenn eine pseudozufällige Zufallszahl 3 oder eine echt zufällige Zufallszahl 4 direkt dem Taktteilerverhältnisfestleger zugeführt wird.

Anhand von Figur 2 wird im folgenden beschrieben, wie in einer vorteilhaften Ausführung aus der Zufallszahl eines der vorbestimmten Taktteilerverhältnisse ausgewählt wird. In der beschriebenen Ausführungsform ist ein Zustandsautomat vorgesehen. Dabei handelt es sich um einen mehrdeutigen Automaten, dies ist allerdings nicht Bedingung für die Ausführbarkeit eines Zustandsautomaten für eine erfindungsgemäße Datenverarbeitungsvorrichtung. Es könnte sich in einer anderen Ausführungsform auch um einen eindeutigen Automaten handeln.

Wie oben beschrieben, sind vier vorbestimmte Taktteilerverhältnisse vorgesehen. Jedem dieser Taktteilerverhältnisse sind zwei Zustände des Zustandsautomaten zugeordnet, so daß sich insgesamt acht Zustände ergeben. Durch die universelle Codierung des Automaten ist jeder der ursprünglichen vier Zustände, entsprechend den vier Taktteilerverhältnissen, benachbart zu jedem anderen. Die Codierung ist so vorgesehen, daß sich bei jedem Zustandsübergang genau 1 Bit ändert (One Hot Codierung). In der Figur 2 sind die acht Zustände mit A1, A2, B1, B2, C1, C2, D1 und D2 bezeichnet. Der Übergang von einem Zustand zu einem anderen wird jeweils durch das Zufallsbit bestimmt. Ausgehend von einem beliebigen Anfangspunkt ergeben sich die folgenden möglichen Folgen für die nachfolgenden Taktteilerverhältnisse. Als Anfangspunkt wird ohne Beschränkung der Allgemeinheit das Taktteilerverhältnis A gewählt:

| | | | | |
|---|---|---|---|---|
| I | A | B | C | D |
| II | A | B | D | C |
| III | A | C | B | D |
| IV | A | C | D | B |
| V | A | D | C | B |
| VI | A | D | B | C |

Aufgrund der Zuordnung von zwei Zuständen pro Taktteilerverhältnis ist es also möglich, zu jedem anderen Taktteilerverhältnis durch eine einzige Zustandsänderung zu gelangen. Beispielsweise gelangt man vom Zustand A1 zwar nur zu den Zuständen B2 und D1 (entsprechend den Taktteilerverhältnissen B bzw. D), nicht aber zu dem Taktteilerverhältnis C. Allerdings kann man von A2 zum Zustand C2, also dem Taktteilerverhältnis C2 gelangen.

Die One Hot Codierung ist im Ausführungsbeispiel dadurch realisiert, daß die folgende Zuordnung vorgesehen ist:

| | | | |
|---|---|---|---|
| A1 | 001 | C1 | 000 |
| A2 | 110 | C2 | 111 |
| B1 | 010 | D1 | 011 |
| B2 | 101 | D2 | 100 |

Aus den Zuständen des Automaten ergeben sich dann die beiden Signale s0 und s1, die der Taktteilerverhältnissteuerung 2 übergeben werden.

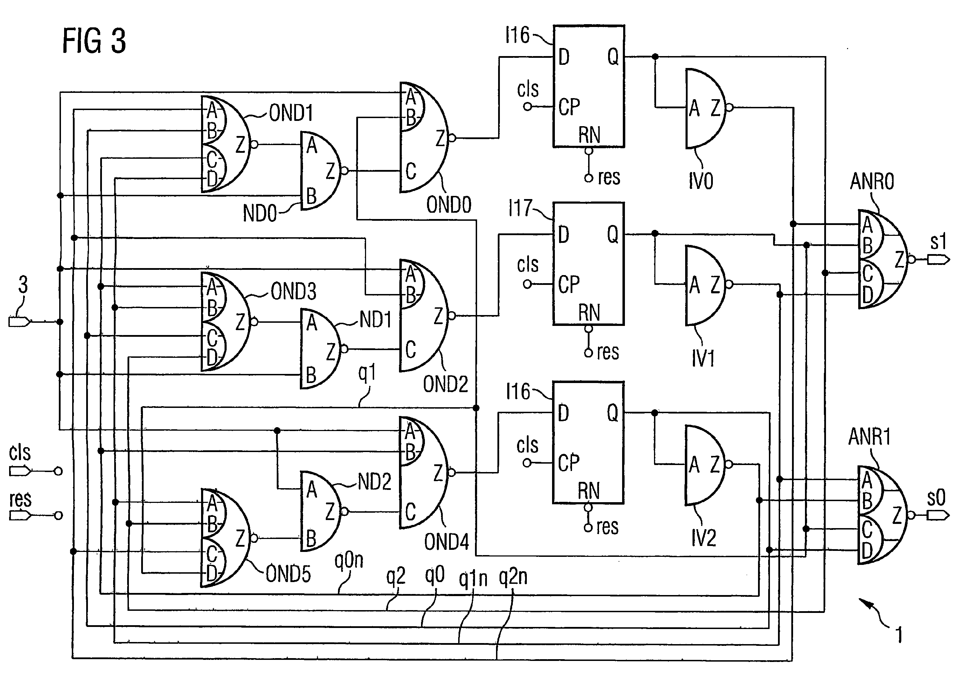

In Figur 3 ist eine Schaltungsanordnung zur Umsetzung des Taktteilerverhältnisfestlegers 1 angegeben. Am Eingang liegt das Zufallssignal 3 an. Darüber hinaus ist ein Taktsignal CLS und ein Resetsignal RES vorgesehen. Am Ausgang werden zwei Signale s0 und s1 ausgegeben zur Weiterleitung an die Taktteilerverhältnissteuerung. Die Schaltung besteht nur aus logischen Verknüpfungsgliedern und drei Flip-Flops. Dadurch ist die Schaltung sehr einfach realisierbar. Die in Figur 3 gezeigte konkrete Ausgestaltung einer Schaltungsanordnung ist jedoch nur als eine von vielen Möglichkeiten zu betrachten, die im Können eines Fachmannes liegt und wird daher nicht im Detail beschrieben. Die gezeigte Ausführungsform ist jedoch insofern vorteilhaft, daß sie offensichtlich symmetrisch aufgebaut ist, was sich günstig auf das Stromprofil auswirkt.

Das gezeigte Ausführungsbeispiel läßt sich verallgemeinern durch Verändern der Anzahl der möglichen Taktteilerverhältnisse sowie durch die Anzahl der Zufallsbits, aufgrund deren über das nächste Teilerverhältnis entschieden wird.

Die beschriebene Schaltung erschwert Attacken auf Sicherheitsschaltungen durch unregelmäßigen Schlüsselwechsel. Basis dieser Ausführung ist die weitgehend gleich verteilte und damit praktisch zufällige Variation des Taktteilerverhältnisses, aus dem der Takt für den Schlüsselwechsel, d.h. das Schlüsselwechselsignal abgeleitet wird.

Für das angegebene Ausführungsbeispiel ergibt sich eine Verringerung der Stromaufnahme um den Faktor 2,5. Dabei ist die Sicherheit des Systems gegenüber einer Lösung aus dem Stand der Technik nicht beeinträchtigt. Bei größeren Taktteilerverhältnissen als 1:8 ergeben sich weitere Vorteile für die Stromaufnahme, allerdings geht dies zu Lasten der Sicherheit. Wie hoch die Anforderungen an die Datensicherheit sind, hängt vom jeweiligen Einsatzfall ab. Daher ist in einer Weiterbildung der Erfindung eine Programmierbarkeit der anwendbaren Taktteilerverhältnisse denkbar, so daß im konkreten Einsatzfall festgelegt werden kann, ob einer hohe Sicherheit oder einem niedrigen Stromverbrauch Priorität eingeräumt werden soll.

### Bezugszeichenliste

- 1: Taktteilerverhältnisfestleger
- 2: Taktteilerverhältnissteuerung
- 3: Pseudozufallszahl
- 4: echte Zufallszahl
- 5: Schlüsselwechselsignal
- 6: Multiplexersteuersignal
- 7: periodisches Taktsignal
- 8: Schlüsselwechselvorrichtungen
- 9: Multiplexer
- s: Taktteilerverhältnisauswahlsignal
- A: erstes Taktteilerverhältnis
- B: zweites Taktteilerverhältnis
- C: drittes Taktteilerverhältnis
- D: viertes Taktteilerverhältnis

## Patentansprüche

1. Datenverarbeitungsvorrichtung mit einem Bussystem und Verschlüsselungsvorrichtungen zur Ver- und Entschlüsselung von auf dem Bussystem übertragenen Informationen und mindestens einer Schlüsselwechselvorrichtung (8) zum Austausch des verwendeten Schlüssels,
**dadurch gekennzeichnet, dass**
- die Datenverarbeitungsvorrichtung mindestens ein Mittel (1, 2) zur Erzeugung eines Schlüsselwechselsignals aufweist,
- das Schlüsselwechselsignal der mindestens einen Schlüsselwechselvorrichtung zugeführt wird,
- das Mittel (1, 2) zur Erzeugung der Schlüsselwechselsignals mindestens einen Eingang für eine Zufallszahl (3, 4) aufweist und
- das Mittel (1, 2) zur Erzeugung des Schlüsselwechselsignals dazu eingerichtet ist, in unregelmäßigen zeitlichen Abständen in Abhängigkeit von der Zufallszahl (3, 4) das Schlüsselwechselsignal zu erzeugen.

2. Datenverarbeitungsvorrichtung nach Anspruch 1,
**dadurch gekennzeichnet, dass**
das Mittel (1, 2) zur Erzeugung eines Schlüsselwechselsignals Folgendes umfasst:
- einen Taktteilerverhältnisfestleger (1), der einen Zustandsautomat aufweist, wobei vorbestimmte Taktteilerverhältnisse (A, B, C, D) jeweils mindestens einen Zustand (1, A2, ... D2) zugeordnet ist und Zustandsänderungen von der Wertigkeit eines Zufallssignals (3, 4) abhängig sind,
- eine Taktteilerverhältnissteuerung (2), die mit Taktteilerverhältnisfestleger (1) verbunden ist und durch die aus einem regelmäßigen Taktsignal (7) das Schlüsselwechselsignal (5) entsprechend des durch den Zustand des Zustandsautomaten festgelegten Taktteilerverhältnisses erzeugbar ist.

3. Datenverarbeitungsvorrichtung nach Anspruch 1 oder 2,
**dadurch gekennzeichnet, daß**
die Zufallszahl (3, 4) eine 1-Bit-Zahl ist.

4. Datenverarbeitungsvorrichtung nach Anspruch 3,
**dadurch gekennzeichnet, daß**
der Zustandsautomat nicht-deterministisch ist.

5. Datenverarbeitungsvorrichtung nach Anspruch 4,
**dadurch gekennzeichnet, daß**
vier vorbestimmte Taktteilerverhältnisse (A, B, C, D) vorgesehen sind und jedem Taktteilerverhältnis zwei Zustände (A1, A2, ...D2) zugeordnet sind.

6. Datenverarbeitungsvorrichtung nach einem der vorhergehenden Ansprüche,
**dadurch gekennzeichnet, daß**
die Datenverarbeitungsvorrichtung eine Chipkarte ist, vorzugsweise eine kontaktlose Chipkarte.

7. Datenverarbeitungsvorrichtung nach einem der Ansprüche 2 bis 6,
**dadurch gekennzeichnet, daß** die Datenverarbeitungsvorrichtung eine Progrommierschmittstelle umfasst und daß
die vorbestimmten Taktteilerverhältnisse (A, B, C, D) über die Programmierschnittstelle festlegbar sind.

## Claims

1. Data processing device with a bus system and encryption devices for encrypting and decrypting information transmitted on the bus system, and with at least one key change device (8) for exchanging the key used,
**characterized in that**
- the data processing device has at least one means (1, 2) for generating a key change signal,
- the key change signal is fed to the at least one key change device,
- the means (1, 2) for generating the key change signal has at least one input for a random number (3, 4),
- the means (1, 2) for generating the key change signal is set up for the purpose of generating the key change signal in a manner dependent on the random number (3, 4) at irregular time intervals.

2. Data processing device according to Claim 1,
**characterized in that**
the means (1, 2) for generating a key change signal comprises the following:
- a clock divider ratio definer (1) which has an automatic state machine, predetermined clock divider ratios (A, B, C, D) each being assigned at least one state (1, A2, ... D2) and state changes being dependent on the significance of a random signal (3, 4),
- a clock divider ratio controller (2) which is connected to clock divider ratio definer (1) and by which the key change signal (5) can be generated from a regular clock signal (7) in accordance with the clock divider ratio defined by the state of the automatic state machine.

3. Data processing device according to Claim 1 or 2,
**characterized in that**
the random number (3, 4) is a one-bit number.

4. Data processing device according to Claim 3,
**characterized in that**
the automatic state machine is non-deterministic.

5. Data processing device according to Claim 4,
**characterized in that**
four predetermined clock divider ratios (A, B, C, D) are provided and each clock divider ratio is assigned two states (A1, A2, ... D2).

6. Data processing device according to one of the preceding claims,
**characterized in that**
the data processing device is a smart card, preferably a contactless smart card.

7. Data processing device according to one of Claims 2 to 6,
**characterized in that** the data processing device comprises a programming interface and **in that**
the predetermined clock divider ratios (A, B, C, D) can be defined by means of the programming interface.

## Revendications

1. Dispositif de traitement de données comportant un système de bus et des dispositifs de chiffrement pour le chiffrement et le déchiffrement d'informations transmises sur le système de bus et au moins un dispositif de remplacement de clés (8) pour remplacer la clé utilisée,
**caractérisée en ce que**
- le dispositif de traitement de données comporte au moins un moyen (1, 2) destiné à générer un signal de remplacement de clés,
- le signal de remplacement de clés est amené à l'au moins un dispositif de remplacement de clés,
- le moyen (1, 2) destiné à générer le signal de remplacement de clés comporte au moins une entrée destinée à un nombre aléatoire (3, 4) et
- le moyen (1, 2) destiné à générer le signal de remplacement de clés est conçu pour générer le signal de remplacement de clés en fonction du nombre aléatoire (3, 4) à des intervalles de temps irréguliers.

2. Dispositif dé traitement de données selon la revendication 1, **caractérisé en ce que** le moyen (1, 2) destiné à générer un signal de remplacement de clés comporte les éléments suivants :
- un dispositif de détermination de rapport de division de signal d'horloge (1) qui comporte un automate d'état, des rapports de division de signal d'horloge déterminés (A, B, C, D) étant chacun associé à au moins un état (1, A2, ..., D2) et des changements d'état étant fonction de la valeur d'un signal aléatoire (3, 4),
- une commande de rapport de division de signal d'horloge (2), qui est reliée au dispositif de détermination de rapport de division de signal d'horloge (1) et qui permet de générer le signal de remplacement de clés (5) à partir d'un signal d'horloge régulier (7) conformément au rapport de division de signal d'horloge déterminé par l'état de l'automate d'état.

3. Dispositif de traitement de données selon la revendication 1 ou 2, **caractérisé en ce que** le nombre aléatoire (3, 4) est un nombre de 1 bit.

4. Dispositif de traitement de données selon la revendication 3, **caractérisé en ce que** l'automate d'état n'est pas déterministe.

5. Dispositif de traitement de données selon la revendication 4, **caractérisé en ce qu'**il est prévu quatre rapports de division de signal d'horloge prédéterminés (A, B, C, D) et **en ce que** deux états (A1, A2, ... D2) sont associés à chaque rapport de division de signal d'horloge.

6. Dispositif de traitement de données selon l'une des revendications précédentes, **caractérisé en ce que** le dispositif de traitement de données est une carte à puce, avantageusement une carte à puce sans contact.

7. Dispositif de traitement de données selon l'une des revendications 2 à 6, **caractérisé en ce que** le dispositif de traitement de données comporte une interface de programmation, et **en ce que** les rapports de division de signal d'horloge prédéterminés (A, B, C, D) peuvent être déterminés par l'interface de programmation.
